Europäisches Patentamt

European Patent Office

Office européen des brevets

(11) Veröffentlichungsnummer: **0 446 866 A2**

# EUROPÄISCHE PATENTANMELDUNG

(21) Anmeldenummer: 91103748.9

(51) Int. Cl.5: **H02K 5/04**

(22) Anmeldetag: 12.03.91

(30) Priorität: 13.03.90 DE 4007930

(43) Veröffentlichungstag der Anmeldung:
18.09.91 Patentblatt 91/38

(84) Benannte Vertragsstaaten:
DE ES FR GB IT

(71) Anmelder: WILLY VOIT GMBH & Co.
Stanz- und Metallwerk, Saarbrücker Strasse, 2

W-6670 St.Ingbert(DE)

(72) Erfinder: **Schmitt, Jakob**
Steckentalstrasse 69
W-6670 St. Ingbert(DE)

(74) Vertreter: **Vièl, Georg, Dipl.-Ing.**
Patentanwalt Weinbergweg 15
W-6600 Saarbrücken(DE)

(54) Gehäuse für Elektromotoren.

(57) Die Erfindung betrifft ein Gehäuse für Elektromotoren, wobei ein rohrförmiger Abschnitt mit einem darüber befindlichen, diesen umschließenden Konstruktionselement vorhanden und der rohrförmige Abschnitt beidseitig verschlossen ist.

Die Erfindung ist dadurch gekennzeichnet, daß der rohrförmige Abschnitt Öffnungen aufweist, in die Vertiefungen aus der Wandung des Konstruktionselementes napfartig eingedrückt sind.

Die mit der Erfindung erzielten Vorteile bestehen insbesondere darin, daß Flansche und Rohre dreh- und verschiebefest, auf einfache Art mit dem Gehäuse verbunden werden, wobei durch die Art der Ausgestaltung eine große Genauigkeit bei der Positionierung und eine hohe Prozeßsicherheit bei der Herstellung der Verbindung erreicht wird und die Korrosionsbeständigkeit erhalten bleibt.

Fig. 3

EP 0 446 866 A2

Die Erfindung betrifft ein Gehäuse für Elektromotoren, wobei ein rohrförmiger Abschnitt mit einem darüber befindlichen, diesen umschließenden Konstruktionselement vorhanden und der rohrförmige Abschnitt beidseitig verschlossen ist.

Gehäuse für Elektromotoren, die in feuchter und aggressiver Umgebung, beispielsweise in Fahrzeugen sowie in Wasch- und Spülmaschinen, eingesetzt sind, bestehen in der Regel aus verzinktem, zu Rundrohr gebogenem Blech und seitlichen Abdeckungen. Flansche zum Befestigen des Gehäuses werden bevorzugt an das Gehäuse geschweißt. Das Verschweißen (Punktschweißen) aber beschädigt die auf dem Blech aufgebrachte Zinkschicht.

Andererseits besteht die Möglichkeit, teuer und aufwendig zu kleben, jedoch mit der Gefahr, daß die Klebeverbindung zwischen Gehäuse und Flansch sich über längere Zeit löst.

Ähnliche Schwierigkeiten ergeben sich auch beim Anbringen eines zweiten, das rohrförmige Gehäuse umschließenden Rohres. Dies ist unter Umständen aus Stabilitäts- und elektrotechnischen Gründen notwendig, wenn die Blechstärke des Gehäuses nicht ausreicht. Die Blechstärke ist bei verzinktem Blech, das zu Rohren kleinerer Durchmesser biegerund verformt wird, nach derzeitigem Stand aber auf eine Stärke von max. 3 mm begrenzt, im wesentlichen aus walztechnischen Gründen.

Der Erfindung liegt somit die Aufgabe zugrunde, diese Mängel zu vermeiden, und ein Gehäuse der eingangs geschilderten Art so zu verbessern, daß Konstruktionselemente, wie Flansche und Rohre, ohne Schweißen oder Kleben fest mit dem Gehäuse verbunden werden können.

Die Erfindung löst die gestellte Aufgabe dadurch, daß der rohrförmige Abschnitt Öffnungen aufweist, in die Vertiefungen aus der Wandung des Konstruktionselementes napfartig eingedrückt sind.

Vorzugsweise sind die Öffnungen erfindungsgemäß als Schlitze ausgebildet.

Es ist nach der Erfindung aber auch möglich, daß die Öffnungen kreisförmig ausgebildet sind.

Die mit der Erfindung erzielten Vorteile bestehen insbesondere darin, daß Flansche und Rohre dreh- und verschiebefest, auf einfache Art mit dem Gehäuse verbunden werden, wobei durch die Art der Ausgestaltung eine große Genauigkeit bei der Positionierung und eine hohe Prozeßsicherheit bei der Herstellung der Verbindung erreicht wird und die Korrosionsbeständigkeit erhalten bleibt.

Ausführungsbeispiele der Erfindung sind in der Zeichnung dargestellt und werden nachfolgend näher beschrieben.

Es zeigt

Fig. 1    die Ansicht eines rohrförmigen Gehäuses mit Schlitzen,

Fig. 2    den Schnitt A-A aus Fig. 1,

Fig. 3    den Längsschnitt durch ein rohrförmiges Gehäuse mit Flansch,

Fig. 4    die Ansicht eines geschlitzten Rohres,

Fig. 5    die Draufsicht zu Fig. 4,

Fig. 6    die Ansicht eines rohrförmigen Gehäuses mit darüber befindlichem, geschlitzten Rohr,

Fig. 7    den Schnitt C-C aus Fig. 6 und

Fig. 8    den Ausschnitt D aus Fig. 7.

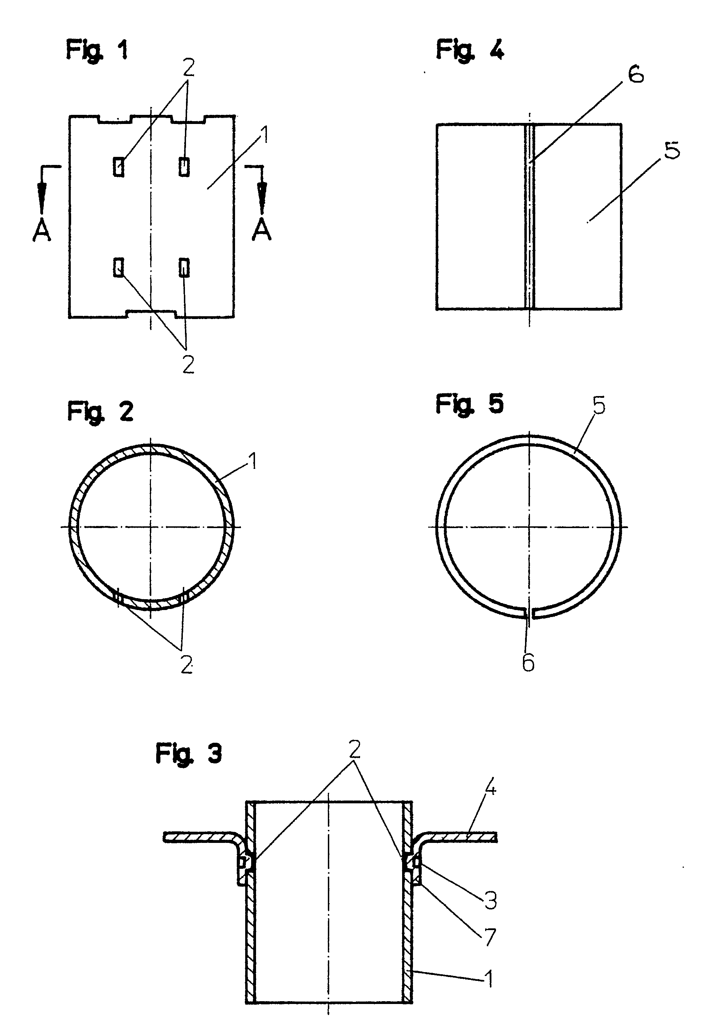

Wie aus Fig. 1 und dem Schnitt A-A aus Fig. 1 in Fig. 2 ersichtlich ist, besteht der wesentliche Teil des Gehäuses für Elektromotoren aus einem beidseitig offenen, rohrförmigen Abschnitt 1, der aus verzinktem Blech hergestellt ist, und der sowohl in Richtung seiner Längsachse als auch radial über seinem Umfang Öffnungen 2 aufweist, die in dem dargestellten Ausführungsbeispiel als Schlitze 2 ausgebildet sind. Ohne Einschränkung der Funktionsfähigkeit ist es aber auch möglich, daß die Öffnungen 2 kreisförmig, beispielsweise Bohrungen, sind. Die Öffnungen 2 dienen zur Aufnahme von Vertiefungen 3 von Konstruktionselementen 4, 5, beispielsweise von Flanschen 4 oder Rohren 5, um diese an dem rohrförmigen Abschnitt 1 (Gehäuse) anzubringen, was noch beschrieben wird.

Die Öffnungen 2 lassen sich ohne Schwierigkeiten an jeder beliebigen Stelle in den rohrförmigen Abschnitt 1 einbringen, so daß jede gewünschte Positionierung der Konstruktionselemente 4, 5 entsprechend ihrer Aufgabe, an dem Gehäuse mit großer Genauigkeit möglich ist.

In Fig. 3 ist in Schnittdarstellung ein Ausführungsbeispiel aufgeführt, das zeigt, wie ein Flansch 4 an dem mit Schlitzen 2 versehenen, rohrförmigen Abschnitt 1 erfindungsgemäß befestist ist. In die Schlitze 2 sind Vertiefungen 3 aus der Wandung 7 des um den rohrförmigen Abschnitt 1 angeordneten Flansches 4 napfartig eingedrückt. Dadurch wird auf einfache Weise und mit hoher Genauigkeit eine dreh- und verschiebefeste Verbindung zwischen dem rohrförmigen Abschnitt 1 und dem Flansch 4, der beispielsweise zum Befestigen des Gehäuses dienen kann, hergestellt.

Ein weiteres Ausführungsbeispiel der erfindungsgemäßen Verbindung des rohrförmigen Abschnitts 1 mit einem anderen, darüber befindlichen, als geschlitztes Rohr 5 ausgebildeten Konstruktionselement ist in den nachfolgenden Fig. 4 bis 8 dargestellt. Gleiche Teile wie in den Fig. 1 bis 3 sind mit den gleichen Bezugszeichen bezeichnet.

Eine derartige Anordnung ist erforderlich, wenn die Blechstärke des rohrförmigen Abschnitts 1 beispielsweise aus Stabilitätsgründen oder aus elektrotechnischen Gründen nicht ausreichend ist.

Fig. 4 zeigt die Ansicht des über seine Länge mit einem Schlitz 6 versehenen Rohres 5, das auf den rohrförmigen Abschnitt 1 aufgespreizt wird, während in Fig. 5 die Draufsicht B-B des geschlitzten Rohres 5 aus Fig. 4 dargestellt ist.

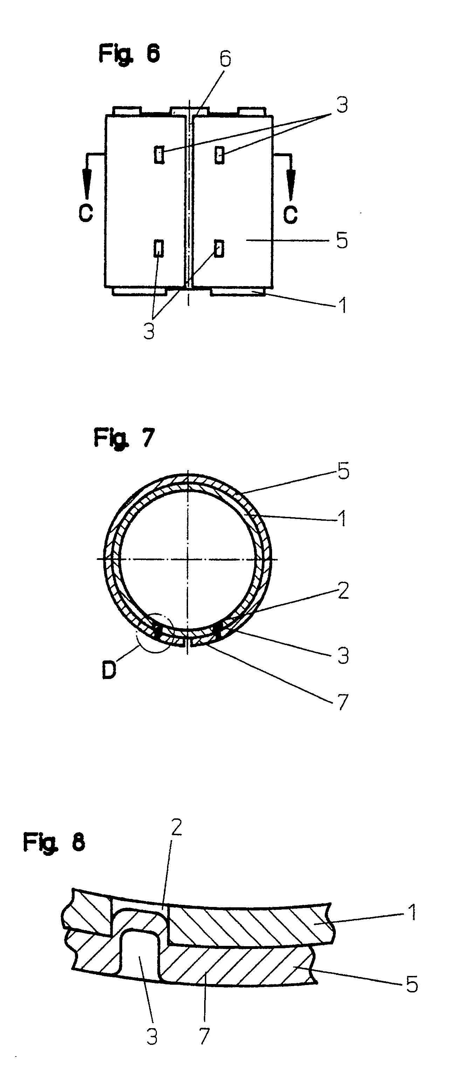

Nach Aufspreizen des geschlitzten Rohres 5 auf den rohrförmigen Abschnitt 1 werden, wie aus Fig. 6 hervorgeht, Vertiefungen 3 aus der Wandung 7 des Rohres 5 in zugeordnete Schlitze 2 (in Fig. 6 nicht sichtbar) des rohrförmigen Abschnitts 1 gedrückt.

Der Schnitt C-C aus Fig. 6 durch den rohrförmigen Abschnitt 1 mit aufgespreiztem Rohr 5 im Bereich der Vertiefungen 3, der in Fig. 7 dargestellt ist, sowie der Ausschnitt D aus Fig. 7 in Fig. 8 verdeutlichen das napfartige Einsenken der Vertiefungen 3 aus der Wandung 7 des geschlitzten Rohres 5 in die zugeordneten Schlitze 2 des rohrförmigen Abschnitts 1. Durch den beim Drücken ausgelösten Werkstofffluß werden die Schlitze 2 fast vollständig ausgefüllt und rohrförmiger Abschnitt 1 und geschlitztes Rohr 5 so miteinander verklemmt, daß axial und radial keine Verschiebung der beiden Teile 1 und 5 gegeneinander möglich ist.

**Patentansprüche**

1. Gehäuse für Elektromotoren, wobei ein rohrförmiger Abschnitt mit einem darüber befindlichen, diesen umschließenden Konstruktionselement vorhanden und der rohrförmige Abschnitt beidseitig verschlossen ist, dadurch **gekennzeichnet**, daß der rohrförmige Abschnitt (1) Öffnungen (2) aufweist, in die Vertiefungen (3) aus der Wandung (7) des Konstruktionselementes (4, 5) napfartig eingedrückt sind.

2. Gehäuse nach Anspruch 1, dadurch **gekennzeichnet**, daß die Öffnungen (2) als Schlitze ausgebildet sind.

3. Gehäuse nach Anspruch 1, dadurch **gekennzeichnet**, daß die Öffnungen (2) kreisförmig ausgebildet sind.

Fig. 1

Fig. 4

Fig. 2

Fig. 5

Fig. 3

**Fig. 6**

**Fig. 7**

**Fig. 8**